Europäisches Patentamt

European Patent Office

Office européen des brevets

(11) Publication number: **0 405 885 A1**

# EUROPEAN PATENT APPLICATION

(21) Application number: **90306926.8**

(22) Date of filing: **25.06.90**

(51) Int. Cl.⁵: **G11B 20/12**

(30) Priority: **27.06.89 JP 164698/89**

(43) Date of publication of application:
**02.01.91 Bulletin 91/01**

(84) Designated Contracting States:
**DE FR GB NL**

(71) Applicant: **MATSUSHITA ELECTRIC INDUSTRIAL CO., LTD.**
**1006, Oaza Kadoma**
**Kadoma-shi Osaka 571(JP)**

(72) Inventor: **Suesada, Kunio**
**7-290 Otodacho**
**Ikoma-shi(JP)**
Inventor: **Koya, Toshiaki**
**9-402, Myokenzaka-3-chome**
**Katano-shi(JP)**

(74) Representative: **Votier, Sidney David et al**
**CARPMAELS & RANSFORD 43, Bloomsbury Squareare**
**London WC1A 2RA(GB)**

(54) Recording device and reproducing device.

(57) A reproducing device comprising sample dividing means (2) for dividing each of N-bit samples of a digital signal M bits by M bits sequentially, starting from the most significant M bits of the sample, to provide L words A of M bits and a word B of the remaining least significant (N - M x L) bits less than M bits; and word B combining means for combining the words B of a plurality of samples to produce a word C of M bits. If, for example, N = 10, M = 8 and L = 1, each sample of 10 bits is divided into a word A of the most significant 8 bits and a word B of the least significant 2 bits. The words B of the respective samples are combined by the word B combining means into a word C of 8 bits, and these words A and C are recorded through a conventional 8-bit special-purpose device digital signal processing circuit. Thus, the recording device is also usable as a 8-bit special-purpose device in circuit and tape format.

## RECORDING DEVICE AND REPRODUCING DEVICE

BACKGROUND OF THE INVENTION

The present invention relates to recording devices and reproducing devices such as digital VTRs which record and reproduce digitized video and voice signals.

Generally, a digital VTR which records an NTSC signal or a PAL signal samples a video signal with a frequency of 4Fsc comprising four times the color subcarrier frequency Fsc and quantizes each sample with 8 bits. Most of the digital signal processors in the digital VTRs process the respective bits of a word in parallel using the 8 bits as one word.

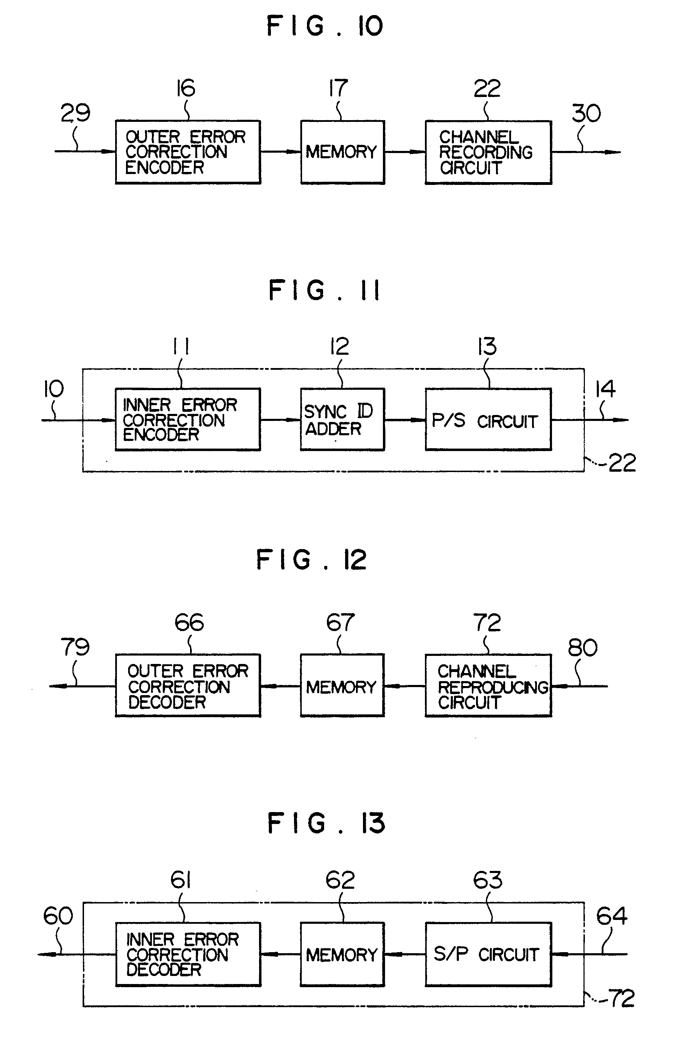

FIG. 10 is a block diagram of a conventional recording apparatus in which a 4Fsc-sampled 8 bit-quantized digital NTSC signal is input to a terminal 29, outer error correction encoding is conducted by an outer error correction encoder 16, rearrangement is conducted between the outer error correction codes and inner error correction codes produced at later stages for generating a product code, and the output is input to a channel recording circuit 22.

FIG. 11 is a detailed block diagram of one embodiment of the channel recording circuit 22. A terminal 10 receives a digital signal from the memory 17 of FIG. 10, an inner error correction encoder 11 encodes inner error correction, a sync ID adder 12 adds an ID and a sync of a sync block, a P/S circuit 13 converts parallel data of 8 bit words to series data and the resulting data is output to a terminal 14. The FIG. 10 channel recording circuit 22 delivers its output to terminal 30 and writes the output into a recording medium via a recording head. Namely, the recording device of FIG. 10 processes the respective bits of a word in parallel using 8 bits as one word, and converts the data to series data using the P/S circuit 13.

FIG. 12 is a block diagram of a conventional reproducing device in which the signal recorded on a recording medium by the recording device of FIG. 10 is reproduced by a reproducing head and is converted to a digital signal, and input to a channel reproducing circuit 72 from a terminal 80.

FIG. 13 is a detailed block diagram of the channel reproducing circuit 72. A digital signal is input to a terminal 64 from the terminal 80 of FIG. 12, converted to parallel data of words of 8 bits by S/P circuit 63, an ID and a sync of a sync block are detected by a sync ID detector 62, and inner error correction is decoded by an inner error correction decoder 61, and the resulting signal is output to a terminal 60. As just described above, after passing through the channel reproducing circuit 72 of FIG.

12, the signal data is rearranged in the memory 67 so as to be reverse to that in the FIG. 10 memory 17, the outer error correction is decoded by the outer error correction decoder 66 and the resulting signal is output to a terminal 79 as a 4Fsc-sampled, 8-bit-quantized digital NTSC signal. Namely, the FIG. 12 reproducing device processes the respective bits of words in parallel using 8 bits as one word from the parallel output of the S/P circuit 63 to the terminal 79 after the series data is converted to parallel data by the FIG. 13 S/P circuit 63.

As described above, most of the recording device and reproducing devices which perform digital signal processing in conventional digital VTRs processes the respective bits of words in parallel on the following reason:

The bit rate of a 4 Fsc-sampled, 8-bit-quantized digital NTSC signal is about 125 Mbit/second. If this signal is intactly processed in series, most of the digital signal processors are operable with a 125 MHz clock, but must be constituted by an ECL logic which is of low integration density and consumes high power. However, if the respective bits of words are processed in parallel, the clock frequency is 4 Fsc, namely, 14.3 MHz, and it can be constituted by a CMOS logic which has high integration density of circuits and low power consumption.

The details of the conventional digital VTR are disclosed in SMPTE D-1 DTTR (by Heitmann, Jurgen K.R. "Electrical System Design for the SMPTE Journal", December, 1986, pp. 1215-1221).

There is the demand that the number of quantizing bits should be high, namely, equal to, or more than, 9 to thereby improve the S/N ratio following a recent tendency to high resolution image quality. However, adoption of an increase in the number of quantizing bits increases the circuit scale and decreases the recording time. Since a 8-bit picture quality is sufficient for regular applications, a 8-bit special-purpose device small in circuit scale and providing much recording time is desired to be left as it is. A high-bit recorder is desired to be used which is capable of recording and reproducing a 9-bit signal only when a high image quality is required. It is desired that the digital signal processor of this high-bit device is used to the utmost also as a 8-bit special-purpose device to increase the cost performance as well as to record and reproduce 8-bit and 9-bit or higher signals.

If the digital signal processor of the 8-bit special-purpose device is solely constructed as a higher-bit one, there are the following problems. First, the error correction circuit operates usually on the basis of a GF($2^8$)-Reed-Solomon codes. For example, GF($2^{10}$) -Reed-Solomon codes are used in the case of a 10-bit signal and a polynomial expression to be generated must be changed. At this time, a circuit for 10-bit use such a a Reed-Solomon encoder or a Syndrome Calculating Circuit (Lin, S., Costello, D.J., Jr.: Error Control Coding, Prentice-Hall, 1983.) cannot process 8 bits due to the nature of Galois field. Therefore, it is impossible to provide an error correction circuit usable for both 8- and 10-bit processing purposes. For most of other digital signal processing circuits, a device designed for 10-bit applications is also usable for 8-bit processing by fixing to "0" the least significant two bits processed in parallel if the device is used for 8-bit processing. However, when such digital signal processor is made of an LSI and used also in a 8-bit special-purpose device, the circuit scale for the least significant two bits and power consumption therefor increase compared to a 8-bit special-purpose LSI. Further, 10 bits are recorded as one word in tape format, so that the least significant two bits become useless in the 8-bit recording and the recording time is reduced by a factor of 8/10 compared to the 8-bit special-purpose format.

## SUMMARY OF THE INVENTION

It is an object of the present invention to provide a device which is usable greatly as a 8-bit special-purpose device and hence is of high cost performance in digital signal processing and tape format when a high bit signal is recorded and reproduced.

In order to achieve the above object, the present invention provides a recording device comprising: sample dividing means for dividing each of N-bit samples of a digital signal M bits by M bits sequentially, starting from the most significant M bits of the sample to provide L words A of M bits and a word B of the remaining least significant (N - M x L) bits less than M bits; and word B combining means for combining the words B of a plurality of samples to produce a word C of M bits.

## BRIEF DESCRIPTION OF THE DRAWINGS

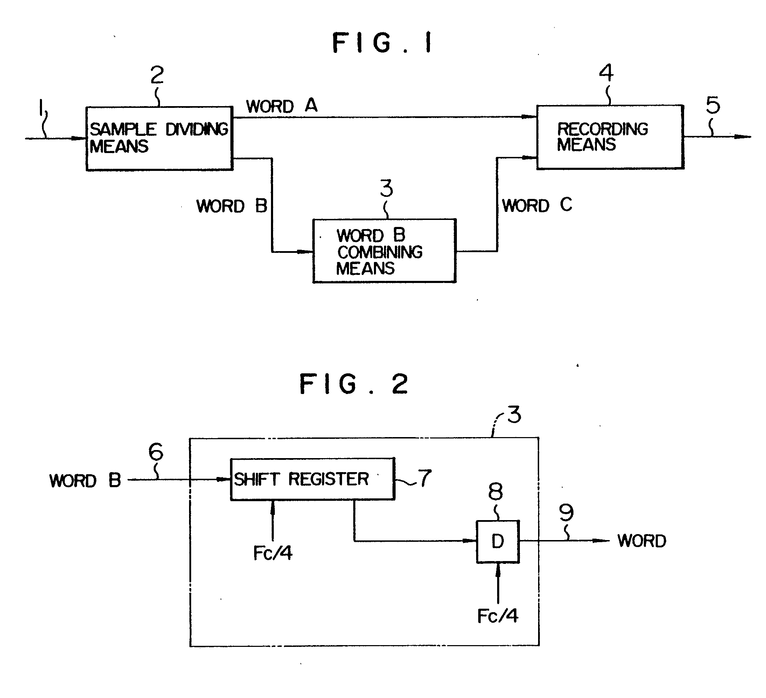

FIG. 1 is a block diagram of one embodiment of a recording apparatus according to the present invention;
FIG. 2 is a detailed block diagram of one embodiment of the word B coupling means of FIG. 1;

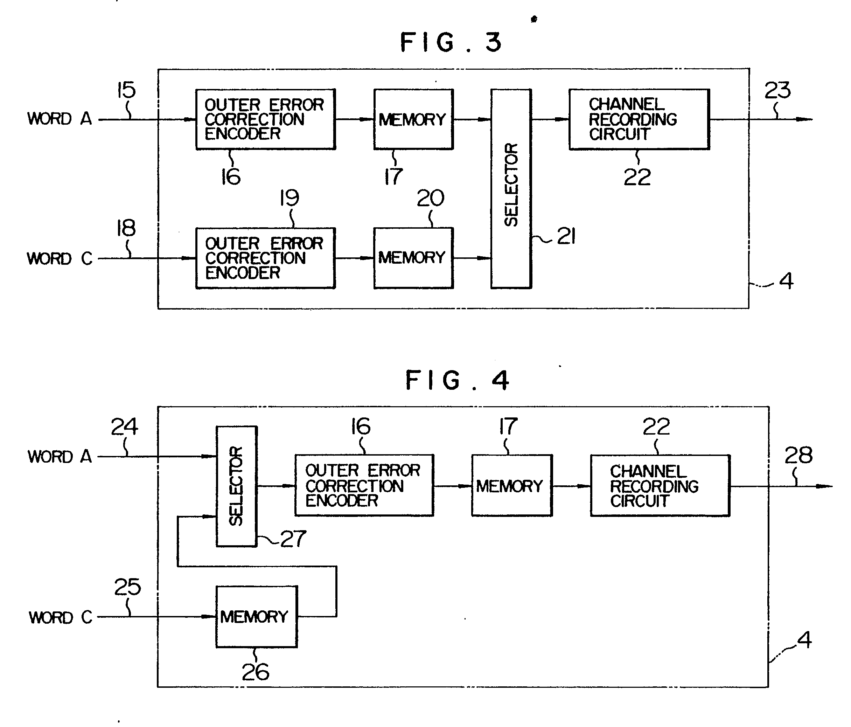

FIG. 3 is a detailed block diagram of a first embodiment of recording means of FIG. 1;

FIG. 4 is a detailed block diagram of a second embodiment of recording means of FIG. 1;

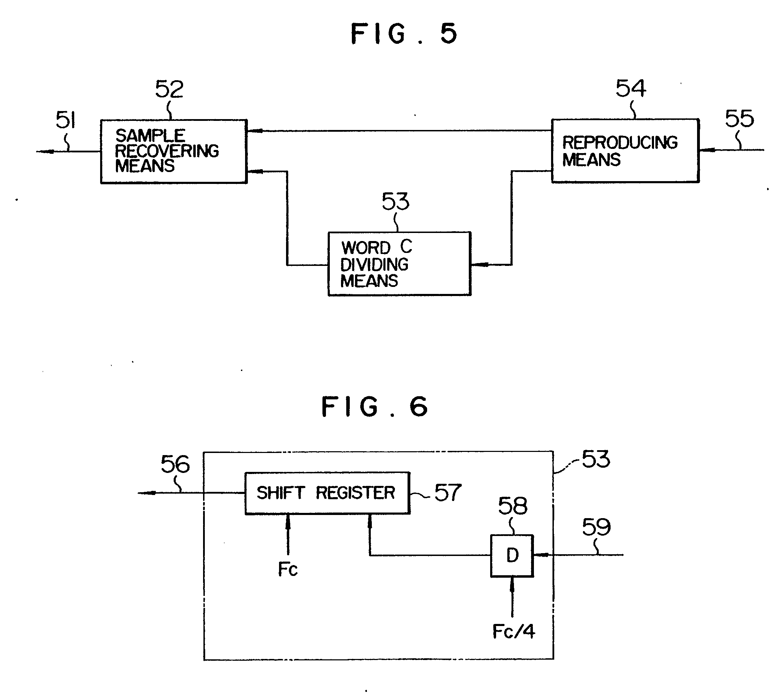

FIG. 5 is a block diagram of one embodiment of a reproducing device according to the present invention;
FIG. 6 is a detailed block diagram of one embodiment of word C dividing means of FIG. 5;

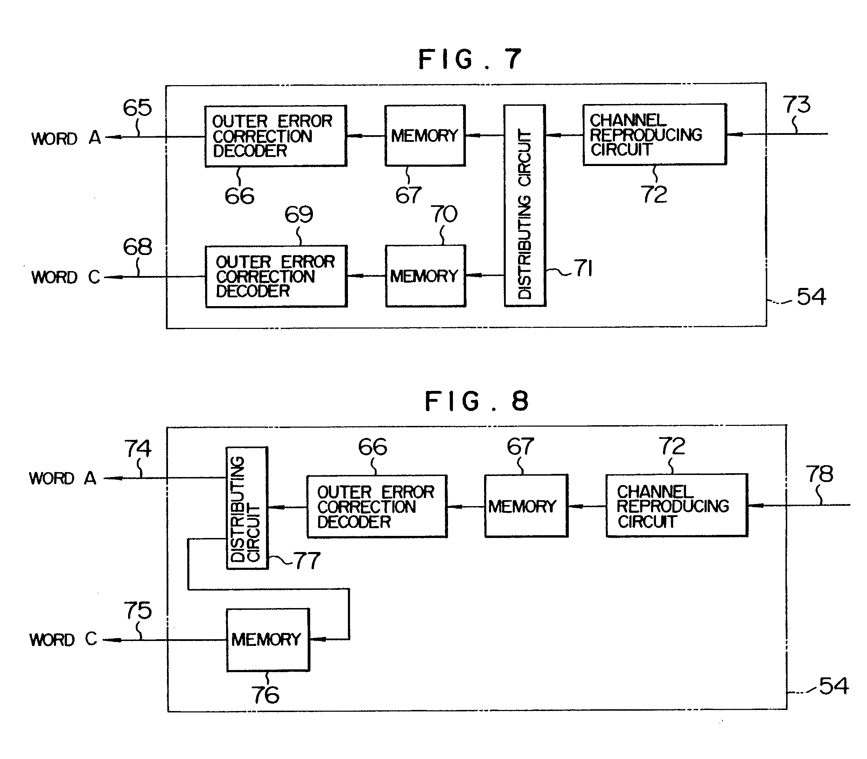

FIG. 7 is a detailed block diagram of a first embodiment of reproducing means of FIG. 5;
FIG. 8 is a detailed block diagram of a second embodiment of the reproducing means of FIG. 5;

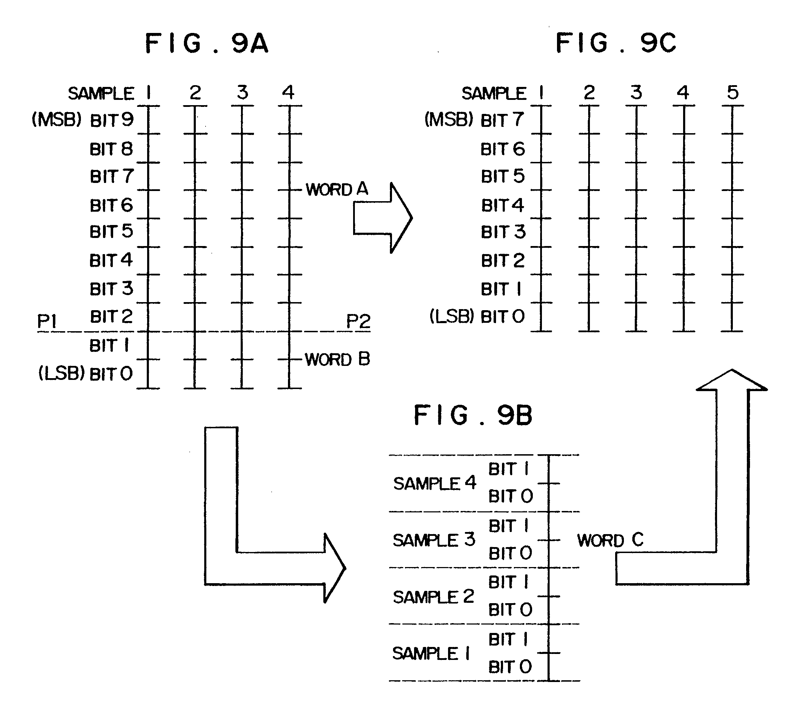

FIGs. 9A, 9B and 9C illustrate the operation of the device of FIG. 1;
FIG. 10 is a block diagram of a conventional recording device;
FIG. 11 is a detailed block diagram of a channel recording circuit of the device of FIG. 10;
FIG. 12 is a block diagram of a conventional reproducing device; and
FIG. 13 is a detailed block diagram of the channel reproducing circuit of FIG. 12.

## DESCRIPTION OF THE PREFERRED EMBODIMENT

FIG. 1 is a block diagram of one embodiment of a recording device according to the present invention. In FIG. 1, a 4Fsc-sampled, 10-bit-quantized NTSC signal is input through a terminal 1 to sample dividing means 2 which includes a 10-bit latch the most significant 8 bits and least significant 2 bits of which are delivered as words A and B to recording means 4 and word B coupling means 3, respectively. FIG. 2 is a detailed block daigram of one embodiment of the word B coupling means 3. The word B from the sample dividing means 2 is input through a terminal 6 to a 2-bit-parallel 4-stage shift register 7 which shifts word B at a clock rate Fc = 4 Fsc. The parallel output from the shift register is latched by a 8-bit latch 8 which operates at a timing rate of Fc/4. Therefore, four words B are simultaneously output to a terminal 9 at the timing rate of Fc/4. This data is input as a word C of 8 bits to the FIG. 1 recording means 4.

FIGs. 3 and 4 are detailed block diagrams of a first and a second embodiment, respectively, of the recording means 4. The recording means 4 of FIGs. 3 and 4 each are a partial modification of the recording device of a conventional digital VTR shown in FIG. 10, so that the description will be limited to only portions related to the present invention.

In FIG. 3, words A and C from the sample dividing means 2 and the word B coupling means 3 of FIG. 1 are input through terminals 15 and 18 to outer error correction encoders 16 and 19, respectively, for outer error correction and encoding. The encoders 16 and 19 are the same structure and operate at a rate of Fc for the word A and at a rate of Fc/4 for the word C, respectively. The outputs from the encoders 16 and 19 are written into memories 17 and 20 at rates of Fc and Fc/4, respectively. In the memories 17 and 20, data are rearranged to constitute an error correction product code between the encoders 16, 19 and an inner error correction decoder of the next channel recording circuit 22 and the same read rate is provided by absorbing the difference between the write rates. Like this, the respective outputs from the memories 17 and 20 and having the same rate are selected by a selector 21 and output through the channel recording circuit 22 out of a terminal 23. There are several conceivable methods of selection by the selector 21. If the number of tracks in one field of 8 bits and the number of tracks in one field of 10 bits are 3 and 4, respectively, and words A and C are divided into 3 and 1 tracks, respectively, and recorded when the signal is of 10 bits, the selector 21 selects a memory 17 output for three tracks and a memory 20 output for one track. If the words A and C are mixed in units of a word and recorded without being divided in units of a track, the selector 21 is selected in units of a word.

In FIG. 4, the word A from the FIG. 1 sample dividing means 2 is input to a terminal 24 while the word C output from the word B coupling means 3 is input to a terminal 25. Samples of the word C actually recorded for a horizontal scanning interval are written into a memory 26 at a rate of Fc/4. The selector 27 selects a word A at a rate of Fc from the terminal 24 only during an interval of the horizontal scanning interval in which samples are recorded actually, and selects the word C at a rate of Fc from the memory 26 during the remaining interval.

As described in the two embodiments of FIGs. 3 and 4, the output of the FIG. 1 recording means 4 is written into a recording medium from a terminal 5 through a recording head (not shown).

The above operation will be described in more detail with reference to FIG. 9 directed to operation description. The FIG. 1 sample dividing means 2 receives a time-series train of samples 1, 2, 3 and 4, which is shown in FIG. 9A. These samples are each made of 10 bits and the respective bits of each sample are given bit numbers such as bit 9, bit 8 ... bit 0 wherein the bit 9 is the most significant bit (MSB) and the bit 0 is the least significant bit (LSB). These samples are divied by a broken line P1 - P2 into a word A of the most significant 8 bits, namely, bit 9, bit 8 ..., bit 2 and a word B of the least significant two bits of bit 1 and bit 0. In the present embodiment, the word B is set constantly so as to be the least significant two bits of each sample because data which has not been corrected sufficiently at a time of error correction would be rendered marked if the word B contains a higher significant bit. Therefore, the word B is constituted by the least possible significant two bits to thereby render the insufficiently corrected data unmarked.

The word B of each sample is input to the FIG. 1 word B coupling means and output as the word C, which is shown in FIG. 9B in which the words B of samples 1 to 4 are combined with each other to become a word C of 8 bits. The word C is input together with the word B to the FIG. 1 recording means 4, which is shown in FIG. 9C in which a word C of FIG. 9B is provided as a sample 5 next to words A of samples 1-4 of FIG. 9A. These samples 1, 2, ..., 5 are collectively subjected to 8-bit recording processing and then written into a recording medium.

The reproducing device will be described next. FIG. 5 is a block diagram of one embodiment of the reproducing device according to the present invention. In FIG. 5, the signal recorded on a recording medium by the embodiment of the FIG. 1 inventive recording device is reproduced by a reproducing head (not shown), and converted to a digital signal, which is then input to reproducing means 54 via a terminal 55.

FIG. 7 is a detailed block diagram of a first embodiment of the reproducing means 54. FIG. 8 is a detailed block diagram of a second embodiment of the reproducing means 54. FIG. 7 corresponds to the first embodiment of the recording means 4 of FIG. 3 while FIG. 8 corresponds to the second embodiments of the recording means 4 of FIG. 4. FIGs. 7 and 8 each show a partial modification of a conventional digital VTR reproducing device of FIG. 12, so that description will be made only of portions directed to the present invention.

In FIG. 7, a digital signal from a terminal 73 is input to a distribution circuit 71 via a channel reproducing circuit 72. The distribution circuit 71 distributes the digital signal into a word A and a word C which are then written into memories 67 and 70, respectively. The words A and C are read from memories 67 and 70 at the rates of Fc and Fc/4 and output to terminals 65 and 68 via outer error correction decoders 66, 69, respectively.

In FIG. 8, the distribution circuit 77 outputs a word A of the output of the outer error decoder 66 at a rate of Fc to a terminal 74 only for a portion of a horizontal scanning interval during which a sample is actually recorded, writes a word C in the memory 76 at a rate of Fc during a time other than the portion, and outputs the word C at a rate of Fc/4 to a terminal 75.

Namely, the output of the FIG. 5 reproducing means 54, namely, the words A from the terminals 65 and 74 of FIGs. 7 and 8 are input directly to the sample recovering means 52 while the words C from the terminals 68 and 75 of FIGs. 7 and 8 are input to the word C dividing means 53.

FIG. 6 is a detailed block diagram of one embodiment of the word C dividing means 53. The word C from the reproducing means 54 is input to a terminal 59 and is latched by a 8-bit latch 58 which operates at a timing rate of Fc/4. The output of the latch is loaded on a 2 bit-parallel 4-stage shift register 57 at a timing rate of Fc/4 and shifted at a clock rate of Fc. Therefore, a 2 bit-parallel word B is output to the terminal 56 at a timing rate of Fc. The word B is input to the FIG. 5 sample recovering means 52 which comprises a 10-bit latch. The sample recovering means receives a word A from the reproducing means 54 at the most significant 8 bits thereof and a word B from the word C dividing means 53 at the least significant 2 bits thereof and latches them at a clock rate of Fc. The output from the sample recovering means 52 comprises a 4Fsc-sampled, 10-bit-quantized digital NTSC signal which is output to a terminal 51.

As described above, according to the present invention, even a device which records and reproduces a 10-bit digital NTSC signal is composed of a conventional 8-bit recording and reproducing device and a few additional circuits wherein the error correction encoding and decoding circuits and most of other digital signal processing circuits of the conventional 8-bit processing system are used, so that the LSIs of the conventional 8-bit device may be used also in a 10-bit device. Thus, the inventive device provides high cost performance as the 10-bit device.

A device in which most of the digital signal processing circuits other than the error correction encoding and decoding circuits are designed as being of a 10 bit type is usable for 8-bit applications, provided that the least significant two bits for parallel processing are fixed to "0". When such a digital signal processing circuit made of an LSI circuit is also used as a 8-bit special purpose device, the circuit scale for the least significant two bits and power consumption increase compared to a 8-bit special-purpose LSI circuit. In addition, 10 bits are recorded as one word in tape format, so that the least significant two bits are rendered useless in 8-bit recording, and the recording time is reduced by a factor of 8/10 compared to the 8-bit special-purpose format. According to the present invention, the above problems are solved.

If the recording means 4 has the structure of the first embodiment of FIG. 3 and the reproducing means 54 has the structure of the first embodiment of FIG. 7, the present invention is realized basically.

With the structures of the second embodiments of FIGs. 4 and 8, hardware is reduced in size compared to the first embodiment, but is usable only to insert the word C during a sample-free time interval, such as a horizontal blanking interval in a horizontal scanning interval of a video signal.

In the present invention the word B is set at the least significant bits of a sample, so that a possible uncorrectable error in the word C constituted by the word B is rendered unmarked compared to that in the word B if same includes the most significant bits.

While the above description handles a video signal, the present invention is also applicable to a voice signal. For example, when a voice signal is quantized with 20 bits, one sample is divided 8 bits by 8 bits, starting from the most significant 8 bits, thereby forming two 8-bit words A and one word B of the remaining 4 bits. The words B for two samples are combined into a word C of 8 bits. In this case, effects produced are similar to those in the case of a video signal.

As described above, according to the present invention, even a 9- or 10-bit digital VTR is constituted by a conventional 8-bit digital signal processing circuit and a few additional circuits. Thus, a high cost performance recording device and a similarly high cost performance reproducing device are provided which may also be used as a 8-bit special purpose device in digital signal processing and tape format.

**Claims**

1. A recording device comprising:
sample dividing means (2) for dividing each of N-bit samples of a digital signal M bits by M bits sequentially, starting from the most significant M bits of the sample to provide L words A of M bits and a word B of the remaining least significant (N - M x L) bits less than M bits;
word B combining means (3) for combining the words B of a plurality of sample to produce a word C of M bits; and
recording means (4) for performing a recording operation including error correction and encoding of the words A and C.

2. A reproducing device comprising:
reproducing means (54) for performing a reproducing operation including error correction and decoding of the words A and C obtained by reproducing a medium recorded by a recording device according to claim 1;
word C dividing means (53) for dividing the word C to produce the word B of each sample; and
sample recovering means (52) for combining L words A and one word B to recover each of the samples of a N-bit digital signal.

# FIG. 1

SAMPLE DIVIDING MEANS — 2
WORD A
RECORDING MEANS — 4
5
WORD B
WORD B COMBINING MEANS — 3
WORD C

# FIG. 2

WORD B — 6
SHIFT REGISTER — 7
8
9 — WORD
$F_c/4$
$F_c/4$
D

EP 0 405 885 A1

FIG. 3

FIG. 4

7

# FIG. 5

# FIG. 6

EP 0 405 885 A1

FIG. 7

FIG. 8

# FIG. 9A

| SAMPLE | 1 | 2 | 3 | 4 | |
|---|---|---|---|---|---|
| (MSB) BIT 9 | | | | | |
| BIT 8 | | | | | |
| BIT 7 | | | | | WORD A |
| BIT 6 | | | | | |
| BIT 5 | | | | | |
| BIT 4 | | | | | |
| BIT 3 | | | | | |
| P1    BIT 2 | | | | | P2 |
| BIT 1 | | | | | |
| (LSB) BIT 0 | | | | | WORD B |

# FIG. 9C

| SAMPLE | 1 | 2 | 3 | 4 | 5 |
|---|---|---|---|---|---|
| (MSB) BIT 7 | | | | | |
| BIT 6 | | | | | |
| BIT 5 | | | | | |
| BIT 4 | | | | | |
| BIT 3 | | | | | |
| BIT 2 | | | | | |
| BIT 1 | | | | | |
| (LSB) BIT 0 | | | | | |

# FIG. 9B

| SAMPLE 4 | BIT 1 | |
|---|---|---|
| | BIT 0 | |
| SAMPLE 3 | BIT 1 | WORD C |
| | BIT 0 | |
| SAMPLE 2 | BIT 1 | |
| | BIT 0 | |
| SAMPLE 1 | BIT 1 | |
| | BIT 0 | |

EP 0 405 885 A1

# F I G . 10

# F I G . 11

# F I G . 12

# F I G . 13

**European Patent Office**

**EUROPEAN SEARCH REPORT**

| DOCUMENTS CONSIDERED TO BE RELEVANT | | | EP 90306926.8 |
|---|---|---|---|
| **Category** | Citation of document with indication, where appropriate, of relevant passages | Relevant to claim | CLASSIFICATION OF THE APPLICATION (Int Cl⁵) |
| X | EP - A2 - 0 178 589 (HITACHI) * Abstract; fig. 4,7; claim 1 * | 1 | G 11 B 20/12 |
| Y | | 2 | |
| Y | EP - A1 - 0 129 224 (HITACHI) * Claims 1,8; fig. 6A-7B; fig. 14-19B * | 2 | |
| | | | **TECHNICAL FIELDS SEARCHED (Int Cl⁵)** |
| | | | G 11 B 20/00 G 11 B 5/00 H 04 N 5/00 |

The present search report has been drawn up for all claims

| Place of search | Date of completion of the search | Examiner |
|---|---|---|
| VIENNA | 06-09-1990 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document but published on, or after the filing date
D : document cited in the application
L : document cited for other reasons

& : member of the same patent family, corresponding document

EPO Form 1503 03 82